# EUROPEAN PATENT SPECIFICATION

(11) **EP 2 730 186 B1**
(45) Date of publication and mention of the grant of the patent: **20.01.2016**
(21) Application number: 13191825.2
(22) Date of filing: 06.11.2013
(51) Int. Cl.: A42B 3/12, B60N 2/42, B65D 81/05, F16F 9/34, F16F 7/01

(54) **Shock absorbing device**
Stossdämpfende Vorrichtung
Dispositif d'absorption de choc

(30) Priority: 08.11.2012 IT MI20121904
(43) Date of publication of application: 14.05.2014
(73) Proprietor: Advance Kites S.r.l., 25057 Sale Marasino (BS) (IT)
(72) Inventor: Mazzucchelli, Alessandro, I-25057 SALE MARASINO (Brescia) (IT)
(74) Representative: Lunati & Mazzoni S.r.L.

(56) References cited:
- EP-A2- 2 426 047
- DE-A1- 19 933 058
- US-A- 5 556 169
- US-A- 5 913 412
- US-A1- 2005 116 380

## Description

The present invention relates to a shock-absorbing device as described in the preamble of claim 1.

Similar devices are described in patent applications: US-A-2005/116380 US-A-5556169 and DE-A-19933058.

In particular, the present invention concerns a shock-absorbing device suitable for use with an object or by a person to cushion and protect the object or the person from excessive and localized forces such as those caused by collisions or impacts.

As is known, there are various types of devices for cushioning impacts.

Such devices generally comprise a rigid and resistant shell and a portion in deformable material suitable to be placed in contact with the object to be protected.

The rigid portions are, for example, made of metal or compound materials, while the deformable portions are generally made of elastomers, honeycomb polymers, cushions filled with various kinds of materials and so on.

Such devices are used in a large number of applications, such as: helmets, protective jackets, containers for fragile objects, various forms of protection for practising dangerous sports, stretchers and wheelchairs for the injured or disabled, rigid devices worn following an injury, and so on.

Moreover, in recent years this same applicant has designed specific shock-absorbing devices comprising a plurality of polymer spheres arranged inside a flexible container. Said spheres may be compacted or released by depressurizing or repressurizing the container,

Said devices are compacted around the part to be protected and consequently adapt their shape to that of said part, so as to permit an ideal and uniform distribution of the loads, caused by impacts, on the object they are protecting. Despite the considerable improvements brought about by these shock-absorbing devices, which are particularly ideal for contrasting forces that are highly localized but not very strong, they still have some important drawbacks. In particular, said devices are unable to adequately cushion particularly strong forces and impacts.

Moreover, said devices need to be more reliable so that they can be used for a long period of time during which the inner volumes undergo frequent depressurization and repressurization.

Lastly, in some cases the spheres in said devices tend to pile up in certain parts of the device as a consequence of gravitational forces.

In this situation the technical purpose of the present invention is to devise a shock-absorbing device able to substantially overcome the drawbacks mentioned above.

Within the scope of said technical purpose an important aim of the invention is to obtain a shock-absorbing device which is capable of guaranteeing good shock absorption at all times, even against strong impacts.

Another important aim of the invention is to obtain a shock-absorbing device that is particularly reliable and long-lasting.

The technical purpose and specified aims are achieved with a shock-absorbing device as described in the annexed claim 1.

The characteristics and advantages of the invention are clearly evident from the following detailed description of preferred embodiments thereof, with reference to the accompanying drawings, in which:
**Fig. 1a** shows a cross-sectional view of a shock-absorbing device according to the invention in a first configuration;
**Fig. 1b** shows the device of Fig. 1a in a second configuration;

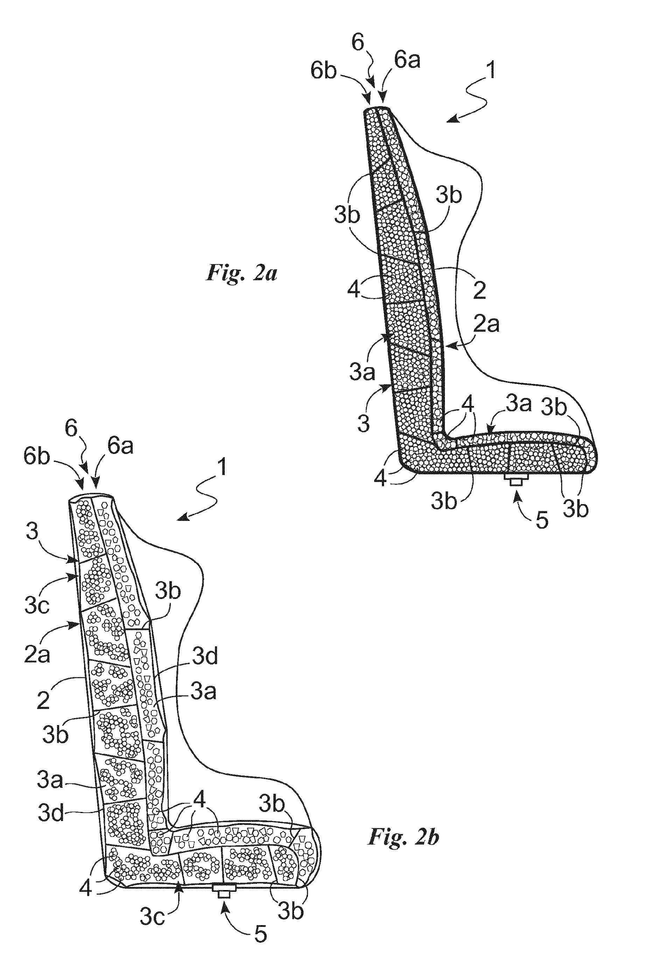

**Fig. 2a** shows a cross-sectional view of a different shock-absorbing device according to the invention in a first configuration;
**Fig. 2b** shows the device of Fig. 1 a in a different second configuration;

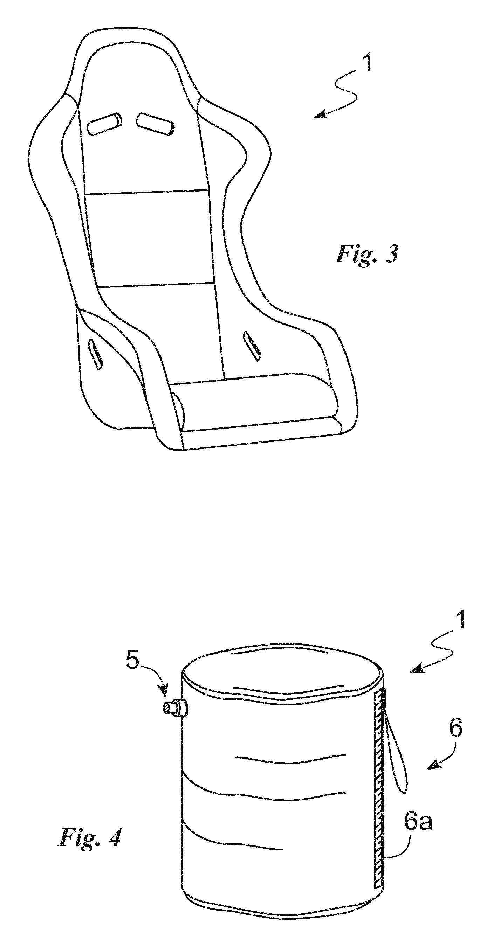

**Fig. 3** shows a seat with a shock-absorbing device according to the invention; and
**Fig. 4** shows a container comprising a shock-absorbing device according to the invention.

With reference to said drawings, reference numeral 1 globally denotes the shock-absorbing device according to the invention.

It is suitable to protect or support an object **10** against impacts and collisions, even strong impacts and collisions, by cushioning said impact and distributing it over a larger impact surface.

The term object 10 is used to refer to an element or a set or plurality of elements, or even a portion of an element, a person or an animal or even a part thereof. The shock-absorbing device 1 can be used for example: to contain and protect a fragile object, to protect a limb or the body of a person for safety reasons, to support the weight of a person riding on a saddle or a similar device, to create customized ergonomic elements, for all the uses cited previously and others as well.

The shock-absorbing device 1 comprises, in brief, a flexible outer container **2,** impermeable to air and defining a primary outer volume **2a;** at least one primary inner container **3** permeable to air housed in the outer container 2 and defining a primary inner volume **3c**. The primary inner container 3 comprises, in turn, a plurality of secondary inner containers **3d** permeable to air and defining secondary inner volumes **3a** inside the primary volume 3c and described in greater detail later on in this document.

The shock-absorbing device 1 also comprises a plurality of filling particles **4** housed in the secondary inner volumes 3a or secondary inner containers 3d. The outer container 2, called outer like the volume 2a because it is outside the container 3, also comprises at least one valve **5** suitable to make or interrupt an air-passage connection between the primary volume 2a and the external environment so as to permit the depressurization of the primary volume 2a, and the consequent depressurization of the secondary volumes 3a, so as to define a released configuration, in which the filling particles 4 are freely movable inside the inner containers 3a and a compressed configuration in which the particles 4 are compacted and form a rigid unit.

More in detail, the outer container 2 is made of a flexible membrane, preferably polymeric, which is also elastic, so as to allow the device 1 to better adapt to the shape of the object 10. In detail, it is preferably made of closed-cell EVA foam, polychloroprene or Neoprene^{®}, polyvinyl chloride or compound materials.

The outer container 2 may also comprise an aperture **5a** through which the object 10 can be inserted into said container. Said aperture 10 is also provided with closing means **5b** impermeable to air, such as, for instance: special zip fasteners of the type used on diving suits, Velcro or other closing means. A similar device is described in patent EP-B-2492211 filed by this same applicant.

The primary inner container 3 is permeable to air, and is preferably made of materials which are permeable owing to their intrinsic and microscopic properties, such as, in particular fabric.

The container 3 is also preferably elastic, in particular made of elastic fabric such as Lycra or a similar material. The primary inner container 3 may be joined to the outer container 2 but not continuously, for example it may be glued at certain points or areas. Alternatively the two containers 2 and 3 may not be joined to one another.

In particular, the primary inner container 3 is internally divided into secondary inner containers 3d made of the same material as the inner container 3.

In particular, the primary inner container 3 is divided by walls **3b**, which are also made of the same material as the inner container 3, more specifically of fabric, so as to form said secondary inner containers 3d and secondary inner volumes 3a. The presence of walls 3b, as described more fully later on in this document and as illustrated in the accompanying drawings, enables the principal inner volume 3c to be divided into a plurality of secondary volumes 3a of the desired height and dimensions in any area of said secondary inner volumes 3a. Said secondary volumes 3a permit a desired and determined arrangement of the filling particles 4. Alternatively, the secondary volumes 3a are reciprocally divided by means of seams or similar means.

The walls 3b and the containers 3 and 3d are thus suitable to contain and retain the filling particles 4 and permit the passage of air.

Moreover, the secondary inner volumes 3a, as illustrated in the accompanying drawings, may be arranged side by side so as to obtain a cushioning layer **6** made up of secondary inner volumes 3a all arranged side by side. In detail, a cushioning layer 6 consists of a primary inner container 3 divided by a plurality of walls 3b which together are suitable to form the different inner containers 3. There may also be a plurality of superimposed layers 6, as described more fully below. The term layers 6, as used in the general sense of the term by the person skilled in the art, refers to the fact that each of these extends so as to wrap completely or partially around the object 10 contained or a relative lower layer. Thus their main surface of extension is substantially the same shape as and parallel to the surface of the object 10.

Several layers 6 are preferably included in a single primary inner container 3 and divided by walls 3b of the type described, that is to say, permeable to air, in particular made of fabric. Alternatively, each layer 6 may be made up of a different primary inner container 3.

The filling particles 4 are movable inside the secondary volumes 3a. In particular, each volume comprises a plurality of particles 4.

The particles 4 may vary in shape, material and dimensions and be of different types so as to define a particular physical property of the compacted particles in the compressed configuration.

In particular one type of particles may be characterized by particles 4 made of a same material and, for example, with dimensions and shapes which may even vary from particle to particle.

Another type of particles 4 may be characterized by particles 4 which are all of the same shape and dimensions and possibly also made of partially different materials but which have similar mechanical properties.

Yet another type may consist of particles 4 which are very similar all having certain dimensions, shapes and materials, with the differences among them falling within very narrow tolerance margins.

In detail, the applicant has found that, surprisingly, with filling particles 4 made of cork it is possible to obtain a perfectly shock-absorbent layer which is also suitable to completely recover the elastic deformation sustained, even after repeated use.

Other important materials which can be very advantageously used with the present device are: cherry stones, and certain polymers such as: PPE (polyphenyl ethers), rubber or thermoplastic polymers, EPS (expanded polystyrene), TPU (thermoplastic polyurethane) and more in particular E-TPU (engineering thermoplastic polyurethane).

The particles may be of the following types: rigid polymers, elastomers, natural kernels and seeds, such as cherry stones, expanded polymers, metals or other rigid particles 4 and so on. Softer materials will constitute softer and more cushioning layers in the compressed configuration, while more rigid materials will constitute more rigid and resistant layers.

The types of particles may also have certain dimensions and shapes, though they are generally approximately spherical with a diameter of less than one millimetre. In particular, smaller-sized particles 4 constitute softer and more cushioning layers in the compressed configuration, while larger-sized particles 4 constitute more rigid and resistant layers.

In particular, each secondary volume 3a comprises filling particles 4 of the same type and different secondary volumes 3a may contain different types of filling particles 4.

Moreover, the layers 6 may appropriately comprise secondary volumes 3a all containing the same type of particles, superimposed on layers 6 comprising secondary volumes 3a all containing a same type of particles which differs from the type of the particles of the underlying layer 6.

For example, it is advantageous to provide a cushioning layer **6a** comprising a type of particles suitable to create a soft, cushioning layer, such as in particular particles made of cork or a similar material, which is placed in contact with or close to the object 10, superimposed on a resistant layer **6b** of particles suitable to create a resistant and rigid layer.

Said combination advantageously results in a rigid and cushioning shock-absorbing device 1 that is thus suitable to protect against even strong impacts or to provide a rigid support which also feels very comfortable.

Additional layers 6 may be also be provided and even outer layers **7** in conventional rigid or cushioning materials, such as conventional deformable polymers or rigid shells made of metal, high-modulus polymers or compound materials. Said outer layers 7 may constitute the outer container 2, or be an integral part thereof of simply connected thereto.

Lastly, the valve 5 is preferably a one-way air vent valve, similar to those used on inner tubes but which function in the opposite direction.

The functioning of a shock-absorbing device described above in a structural sense, is as follows.

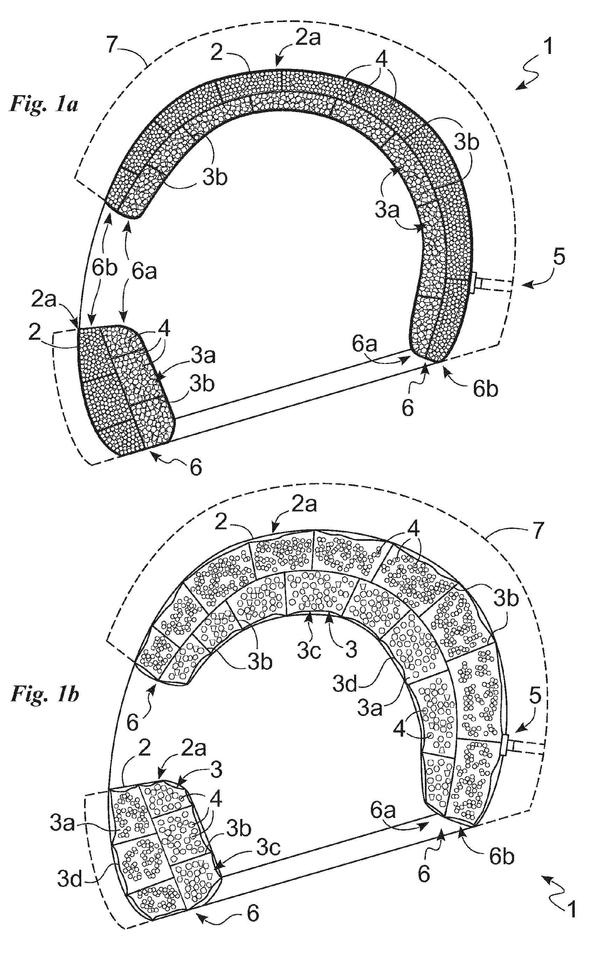

To start with the device 1 is in the released configuration (Figs. 1 a and 2a), the outer volume 2a and the primary inner volume 3c are at ambient pressure and the device 1 is thus flexible and malleable, as the filling particles 4 are freely movable inside the secondary volumes 3a.

The device 1 is arranged in the correct position around the object 10 and adapted to said object 10. In particular the cushioning layers 6a are placed in contact with the object and the resistant layers 6b at a distance.

If the device 1 is provided with the aperture 5a, the object 10 is inserted and wrapped in one or more layers 6. The aperture is then closed again by means of the closing means 5b.

Next, using the valve 5 and a vacuum pump, preferably a manually-operated pump, the air is extracted from the principal volume 2a. The primary inner volume 3c and the secondary inner volumes 3a, which are permeable to air, create an air-passage connection with the primary volume 2a, which is thus also depressurized. The device 1 is thus in the compressed configuration and the particles 4 are compacted to create homogenous bodies with the dimensions of the layers 6 or of the secondary volumes 3a.

Said homogeneous bodies formed by the particles 4 adapt perfectly to the object 10, since they are shaped on the latter.

The resulting layers 6 thus have the properties of the type of particles 4 of which they are made up.

Moreover, the layers 6 are homogeneous with all three dimensions as desired, owing to the presence of the walls 3b which divide each inner container 3 and maintain the desired height.

The elasticity of the containers 2 and 3 also prevents any creasing or curling thereof, and keeps the surface smooth in both configurations.

In many cases, such as with containers, the device 1 is returned to the released configuration after use.

The invention achieves some important advantages.

The presence of different secondary volumes 3a, or entire layers 6, containing different types of filling particles 4 achieves, for example, a device 1 which is perfectly adapted to the object 10 and is both shock-absorbent and resistant.

A further advantage is given by the presence of cork, which gives the device 1 an excellent cushioning structure.

Moreover, owing to its intrinsic properties, cork can be expanded and compressed for a substantially unlimited number of times, without altering its elasticity. Polymers do not offer this advantage.

Cork also has a reduced environmental impact.

Similar advantages are achieved with cherry stones.

Modifications and variations may be made to the invention described herein without departing from the scope of the inventive concept. All the elements as described and claimed herein may be replaced with equivalent elements and the scope of the invention includes all other details, materials, shapes and dimensions.

## Claims

1. A shock-absorbing device (1) comprising an outer container (2) which is flexible and impermeable to air, defining a primary outer volume (2a); a primary inner container (3) which is permeable to air, housed in said outer container (2), defining a primary inner volume (3c) and comprising a plurality of secondary inner containers (3d) which are permeable to air, defining secondary inner volumes (3a); a plurality of filling particles (4) housed in said secondary inner volumes (3a); at least one valve (5) arranged on said outer container (2) and suitable to make or interrupt an air-passage connection between said primary outer volume (2a) and the external environment and suitable to permit the depressurization of said primary volume (2a), so as to define a released configuration, in which said filling particles (4) are movable inside the inner containers (3a), and a compressed configuration in which said primary volume (2a) is depressurized and said distinct particles (4) are compacted; **characterized by** comprising a plurality of superimposed layers (6) each made of a plurality of said inner containers (3a) placed side by side, wherein each of said layers (6) comprises said filling particles (4) of a same type, and comprising at least one cushioning layer (6a) comprising a type of filling particles (4) suitable to obtain a soft, cushioning layer and suitable to be placed close to said object (10), superimposed on a resistant layer (6b) comprising a type of filling particles (4) suitable to obtain a resistant and rigid layer.

2. A shock-absorbing device (1) as claimed in claim 1, wherein one of said types of filling particles (4) is **characterized by** the presence of filling particles (4) made of a selected material and wherein different types of filling particles (4) are **characterized by** different types of material.

3. A shock-absorbing device (1) as claimed in claim 2 wherein one of said types of filling particles (4) is **characterized by** the presence of filling particles (4) having selected dimensions and wherein different types of filling particles (4) are **characterized by** different selected dimensions.

4. A shock-absorbing device (1) as claimed in one or more of previous claims, wherein one of said types of filling particles (4) is **characterized by** particles made of cork.

5. A shock-absorbing device (1) as claimed in one or more of previous claims, wherein one of said types of filling particles (4) is **characterized by** particles made of E-TPU.

6. A shock-absorbing device (1) as claimed in one or more of the preceding claims, wherein said secondary inner containers (3d) are made of fabric which is permeable to air.

7. A shock-absorbing device (1) as claimed in one or more of the preceding claims, wherein said secondary inner volumes (3a) are reciprocally divided by walls (3b) arranged inside said primary inner volume (3c).

## Patentansprüche

1. Stoßdämpfende Vorrichtung (1), die einen flexiblen äußeren, luftdurchlässigen Behälter (2) umfasst, der ein äußeres Hauptvolumen (2a) definiert; sowie einen inneren, luftdurchlässigen und in dem genannten äußeren Behälter (2) untergebrachten Hauptbehälter (3), der ein inneres Hauptvolumen (3c) definiert und eine Vielzahl von sekundären inneren luftdurchlässigen Behältern (3d) umfasst, die sekundäre innere Volumen (3a) definieren; eine Vielzahl an in den genannten sekundären inneren Volumen (3a) untergebrachten Füllpartikeln (4); mindestens ein auf dem genannten äußeren Behälter angeordnetes Ventil (5), das geeignet ist, einen Luftdurchgangs zwischen dem genannten äußeren Hauptvolumen (2a) und der Außenumgebung herzustellen oder zu unterbrechen und die Druckentlastung des genannten Hauptvolumens (2a) zu gestatten, um eine entspannte Konfiguration zu definieren, in der die genannten Füllpartikel (4) im Inneren der inneren Behälter (3a) beweglich sind, und eine zusammengedrückte Konfiguration, in der das genannte Hauptvolumen (2a) druckentlastet ist und die genannten unterschiedlichen Partikel (4) zusammengedrückt sind; **dadurch gekennzeichnet**, eine Vielzahl an übereinander liegenden Schichten (6) zu umfassen, von denen jede aus einer Vielzahl der genannten inneren Behälter (3a) nebeneinander besteht, wobei jede der genannten Schichten (6) die genannten Füllpartikel (4) einer gleichen Typologie umfasst und mindestens eine stoßdämpfende Schicht (6a), die einen Typ Füllpartikel (4) umfasst, die geeignet sind, eine weiche und stoßdämpfende Schicht zu bilden, die außerdem geeignet ist, in der Nähe des genannten Objekts (10) über einer Widerstandsschicht (6b) angeordnet zu werden, die einen Typ Füllpartikel (4) umfasst, die geeignet sind, eine feste und steife Schicht zu bilden.

2. Stoßdämpfende Vorrichtung (1) nach Anspruch 1, bei der einer der genannten Typen von Füllpartikeln (4) durch das Vorhandensein von Füllpartikeln (4) gewählten Materials gekennzeichnet ist und bei der unterschiedliche Typen von Füllpartikeln (4) durch unterschiedliche Materialtypen gekennzeichnet sind.

3. Stoßdämpfende Vorrichtung (1) nach Anspruch 2, bei der einer der genannten Typen von Füllpartikeln (4) durch das Vorhandensein von Füllpartikeln (4) gewählter Abmessungen gekennzeichnet ist und bei der unterschiedliche Typen von Füllpartikeln (4) durch unterschiedliche gewählte Abmessungen gekennzeichnet sind.

4. Stoßdämpfende Vorrichtung (1) nach einem oder mehreren der Ansprüche 2-3, bei der einer der genannten Typen von Füllpartikeln (4) durch Partikel aus Kork gekennzeichnet ist.

5. Stoßdämpfende Vorrichtung (1) nach einem oder mehreren der Ansprüche 2-3, bei der einer der genannten Typen von Füllpartikeln (4) durch Partikel aus E-TPU gekennzeichnet ist.

6. Stoßdämpfende Vorrichtung (1) nach einem oder mehreren der vorangegangenen Ansprüche, bei der die genannten sekundären inneren Behälter (3d) aus luftdurchlässigem Gewebe bestehen.

7. Stoßdämpfende Vorrichtung (1) nach einem oder mehreren der vorangegangenen Ansprüche, bei der die genannten sekundären inneren Volumen (3a) jeweils durch Wände (3b) unterteilt sind, die im Inneren des genannten inneren Hauptvolumens (3c) angeordnet sind.

## Revendications

1. Dispositif d'absorption de chocs (1) comprenant un contenant externe (2) flexible, étanche aux aériformes et définissant un volume externe principal (2a) ; un contenant interne principal (3), perméable aux aériformes, logé dans ledit contenant externe (2) définissant un volume interne principal (3c) et comprenant une pluralité de contenants internes secondaires (3d), perméables aux aériformes et définissant des volumes internes secondaires (3a) ; une pluralité de particules de remplissage (4) logées dans lesdits volumes internes secondaires (3a) ; au moins une valve (5) placée sur ledit contenant externe (2) et susceptible de réaliser ou d'interrompre une connexion de passage d'aériformes entre ledit volume externe principal (2a) et l'environnement externe et apte à permettre la dépressurisation dudit volume principal (2a), de sorte à définir une configuration détendue, dans laquelle lesdites particules de remplissage (4) sont mobiles à l'intérieur des contenants internes (3a) et une configuration comprimée dans laquelle ledit volume principal (2a) est dépressurisé et lesdites particules distinctes (4) sont compactées ; **caractérisé en ce qu'**il comprend une pluralité de couches (6) superposées, chacune composée d'une pluralité desdits contenants internes (3a) juxtaposés dans lesquels chacune desdites couches (6) comprend lesdites particules de remplissage (4) d'une même typologie et comprenant au moins une couche d'absorption de chocs et apte à être placée à proximité dudit objet (10), superposée à une couche résistante (6b) comprenant une typologie de particules de remplissage (4) aptes à réaliser une couche résistante et rigide.

2. Dispositif d'absorption de chocs (1) selon la revendication 1, dans lequel une desdites typologies de particules de remplissage (4) est **caractérisée par** la présence de particules de remplissage (4) en matériel choisi et dans laquelle plusieurs typologies de particules de remplissage (4) sont **caractérisées par** plusieurs typologies de matériel.

3. Dispositif d'absorption de chocs (1) selon la revendication 2, dans lequel une desdites typologies de particules de remplissage (4) est **caractérisée par** la présence de particules de remplissage (4) de taille choisie et dans lequel différentes typologies de particules de remplissage (4) sont **caractérisées par** différentes tailles choisies.

4. Dispositif d'absorption de chocs (1) selon une ou plusieurs des revend i-cations 2 ou 3, dans lequel une desdites typologies de particules de remplissage (4) est **caractérisée par** des particules en liège.

5. Dispositif d'absorption de chocs (1) selon une ou plusieurs des revend i-cations 2 ou 3, dans lequel une desdites typologies de particules de remplissage (4) est **caractérisée par** des particules en E-TPU.

6. Dispositif d'absorption de chocs (1) selon une ou plusieurs des revend i-cations précédentes, dans lequel lesdits contenants internes secondaires (3d) sont en tissu perméable aux aériformes.

7. Dispositif d'absorption de chocs (1) selon une ou plusieurs des revend i-cations précédentes, dans lequel lesdits volumes internes secondaires (3a) sont réciproquement divisés par des parois (3b) placées à l'intérieur dudit volume interne principal (3c).
